Europäisches Patentamt

**European Patent Office**

Office européen des brevets

(11) Publication number: **0 439 245 A2**

# EUROPEAN PATENT APPLICATION

(21) Application number: **91300016.2**

(22) Date of filing: **02.01.91**

(51) Int. Cl.⁵: **G06F 9/44, G06F 9/45**

(30) Priority: **23.01.90 US 468656**

(43) Date of publication of application:
**31.07.91 Bulletin 91/31**

(84) Designated Contracting States:
**BE CH ES FR GB IT LI**

(71) Applicant: **WESTINGHOUSE ELECTRIC CORPORATION**
**Westinghouse Building Gateway Center**
**Pittsburgh Pennsylvania 15222(US)**

(72) Inventor: **Impink, Albert Joseph, Jr.**
**18 Bel-Aire Road**
**Delmont, PA 15626(US)**
Inventor: **Lipner, Melvin Herbert**
**1352 Foxboro Drive**
**Monroeville, PA 15146(US)**
Inventor: **Mundy, Roger Andrew**
**1996 Tara Drive**
**North Huntingdon, PA 15642(US)**
Inventor: **Sariscak, Robert Eugene**
**1331 Cavitt Road**
**Monroeville, PA 15146(US)**

(74) Representative: **van Berlyn, Ronald Gilbert**
**23, Centre Heights**
**London, NW3 6JG(GB)**

(54) Translator for computer aided generation of code for on-line interactive monitoring of the execution of complex operating procedures.

(57) The present invention is a system that interacts with the translator user by requesting information relevant to process operating procedures. Information such as constraints on the process and the logic for ascertaining completion of various procedure steps are obtained from the user, such as a technician or plant operator, who is providing the information from a previously created written procedure or procedure flow diagram or from a user such as a plant design engineer, who is creating a procedure for a newly designed process. The system requests the information from the user in an order which allows the technician to follow the written procedure in answering system queries or in a top down order as would be the design approach taken by the engineer. As query answers are provided, lines of executable code in various procedure templates are completed and written to temporary files. After all queries are answered for a particular step within a procedure, the system arranges the template code in an order that ensures all variable values are read in or calculated before they are needed and that all plant operator response requests appear in the appropriate position in the procedure that is produced on the operator monitor as the procedure is executed. The system also allows the translator to designate other procedures for execution or initiate other actions such as production of nonprocedural displays on adjacent monitors. The information appearing on the operator monitor and any adjacent monitors, and produced or initiated by the code, aids the operator in performing the procedure correctly.

# TRANSLATOR FOR COMPUTER AIDED GENERATION OF CODE FOR ON-LINE INTERACTIVE MONITORING OF THE EXECUTION OF COMPLEX OPERATING PROCEDURES

This application includes a microfiche appendix which includes a FORTRAN source code appendix (Appendix III) which when complied will perform the functions and steps described herein. This microfiche appendix includes 2 fiche and 148 frames.

The present invention is directed to a translator which interrogates a human user to determine the requirements for monitoring of the execution of complex operating procedures and translates the user inputs into ultimately executable computer code, which, when executed, will guide an operator of a process plant such as a power plant in executing the relevant procedures.

Machine assisted execution of process operating procedures is an established method of assisting an operator in proceeding step by step through procedures for operating complex process facilities. Such a system is described in U.S. Patent No. 4,815,014 assigned to Westinghouse Electric Corporation. A system which implements such a method of machine assisted execution of process operating procedures is available from Westinghouse as the COMPRO system. In systems such as COMPRO a skilled human programmer, who is also knowledgeable with regard to the content and intent of a selected procedure, and knowledgeable with respect to the process facilities, reviews the procedure, which is to be automated, and develops the logic and code for monitoring the execution of this procedure and producing the appropriate displays. In such systems, manual generation by human programmers of the final procedure equivalent code requires a significant amount of time even though programmers of ordinary skill can produce the code. When multiple programmers are implementing various procedures, it is quite common for the final code representing the several procedures to be arranged differently even through the result produced by the code may be essentially the same. This variance among programers requires that each set of code be tested extensively to ensure proper operation.

It is a primary object of the present invention to provide a system which will allow people other than programmers to produce complex operating procedure code.

It is another object of the present invention to standardize complex operating procedure code and the arrangement of various routines within the code.

It is an object of the present invention to standardize the code to reduce the need for extensive testing and verification.

It is also an object of the present invention to provide a system which will order the input of data for creating software procedures in a order natural for a human user such as a top down order expected by users when reviewing a written procedure.

It is a further object of the present invention to arrange the code in a manner most suitable for machine execution to ensure that all variables are available and/or conditions tested for these variables before the results are needed in a subsequent section of the code (that is, an inside out or bottom up arrangement).

It is an object of the present invention to permit creation of procedures in foreign languages using the same system used in creating such in the English language.

The above objects can be accomplished by a system that allows the user to answer queries about the execution of a procedure in an order natural to a human such as top down. The answers to the queries complete executable code templates for the procedure which are arranged in an order, such as bottom up, which is suitable for machine execution. The output code when executed assists a process operator in implementing the desired procedure by creating appropriate procedure displays on an operator video display correlated to the state of the process being monitored during the procedure.

These together with other objects and advantages which will be subsequently apparent, reside in the details of construction and operation as more fully hereinafter described and claimed, reference being had to the accompanying drawings forming a part hereof, wherein like numerals refer to like parts throughout.

Fig. 1 illustrates the relationship of the present invention to a machine assisted execution of complex operating procedures systems such as COMPRO;

Fig. 2 depicts a typical process sequence for an identification session; and

Fig. 3 shows the flow of the translator 10.

The present invention provides a method for converting or translating user input in near-natural language, into firmly structured, preverified, compilable code. The preverified code includes correct code comments, correct syntax and a correct sequence of execution. The code is fully compatible with a system which provides computer based monitoring of the execution of complex operating procedures. This description will be provided with reference to the COMPRO system previously mentioned, but is adaptable to other types of computer assisted systems by those of ordinary skill in the art. The description will also be oriented to power plants but is adaptable to other types of procedure assisted processes such as chemical plant control procedures and rocket launch count down procedures. The description herein is also oriented to creating a system in the FORTRAN language for a Gould mini computer and, of course, other higher level languages such as "C" or "IPL" can be used along with different computers.

The method of the present invention incorporates the logic of the selected procedures in detailed, structured code, which greatly simplifies the verification and validation of the code thereby generated by transferring the testing requirements to the code generating software rather than imposing these requirements on the final resulting code itself. The translator software which translates the user inputs into code needs to be subjected to the testing requirement only once, when the software is put into service. The resulting code need only be checked for accuracy and appropriateness to the user inputs so that detailed, line by line checking of the final code for programmer errors is bypassed entirely. The present invention transfers many of the routine aspects of implementation of the code generation process to the computer.

The functions of the translator of the present invention are: 1. To determine from the human user of the invention, for any given step in any given procedure, what is to be accomplished in that step and what criteria are to be utilized in demonstrating complete accomplishment or, by default, incomplete accomplishment of that step. 2. To interrogate the human user of the invention to determine what guidance should be given to the eventual user of the final implementation of the generated code when incomplete accomplishment of the procedure step is recognized by the resultant code logic. 3. To determine, by questioning the user, what logic is to be applied to permit and accept an override by the ultimate user (the plant operator) in the event that it becomes apparent that the machine assisted execution of the process operating procedures system is, for any of several reasons, misinterpreting a given existing situation and providing invalid guidance. 4. To insert at each stage in the interrogation process character strings, derived from the input of the user, into pre-programed software constructs, for example, format statements or other FORTRAN constructs if the translator is written in FORTRAN. 5. To write output statements comprising ultimately executable code utilizing the internally created format statement to a disk file.

The contents of the resulting disk file are the compilable code that contains, for machine assisted execution of process operating procedures systems such as COMPRO, the logic of the procedure step being treated, and the several messages that should appear on the operator's computer screen in response to the processing of plant data as the execution of the procedure progresses.

In using the present invention a typical user, such as a plant engineer or plant operator who need have no programming experience, would likely be reviewing a written procedure such as illustrated in Appendix I. However, it is possible that a user, such as a design engineer, could be creating an entirely new procedure when confronted with the task of procedure creation for a new process plant. A block of partially blank format statements, or the equivalent if the present invention is written in a high level language other than FORTRAN, is considered for the purposes of the description of the present invention to be a "template". An example of a template is set forth in Appendix II. In Appendix II the underlining indicates the portions of the template which are filled in by internal processing of user responses to queries by the present invention. The symbols which are underlined are the responses by the user to ˙the present invention when implementing the procedure of Appendix I. The order of the blank locations in the template is not necessarily the order in which the queries are provided to the user, as will be discussed in more detail hereinafter. However, the answers to the queries, and the resultant code are ordered for appropriate machine execution, which is different from the order in which the user answered the queries. Several such templates are embedded within the code of Appendix III, where each template is applicable to a particular type or classification of procedure step, substep or component. Many steps of many different procedures fall within the same particular classification, hence, each such step is translated using the same common template. A modest number of templates is capable of handling a broad spectrum of procedures associated with power plants or other complex facilities.

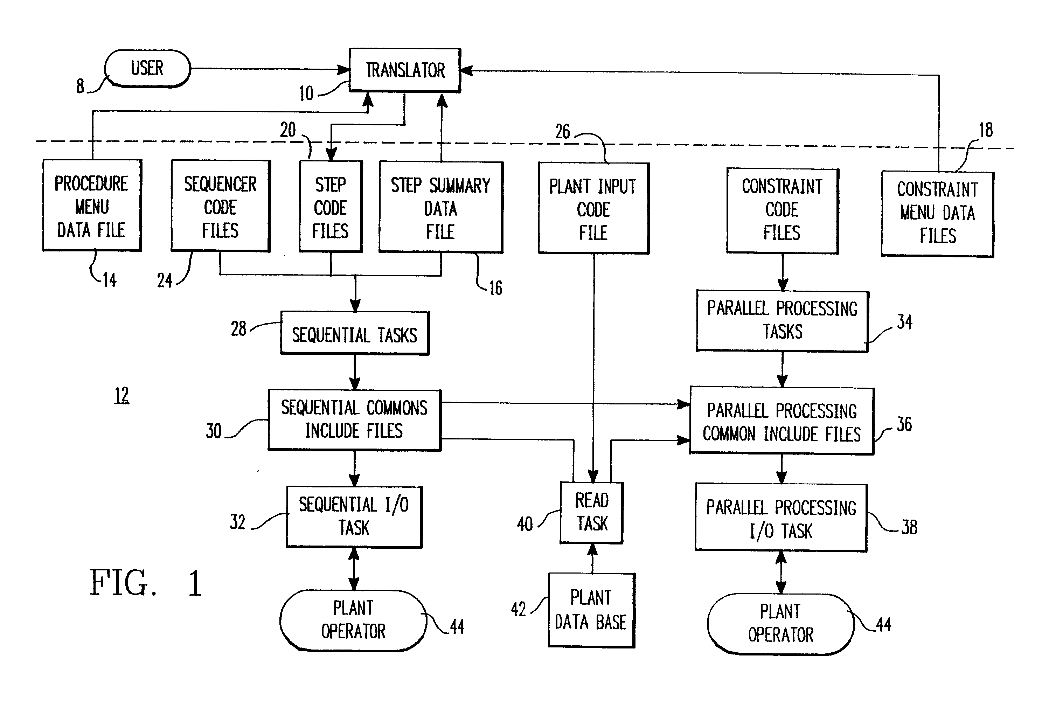

The relationship of the translator 10 to the existing machine assisted execution of process operating procedures system 12, which is preferably the COMPRO system previously discussed, is illustrated in Figure 1. The translator 10 interacts with the user 8 and obtains existing procedure information from a procedure menu data file 14 an example of which is illustrated in Appendix IV. The translator 10 also receives information from the step summary data file 16 such as illustrated in Appendix V. The step summary data file 16 summarizes the actions of the steps associated with the procedure and gives the user a description of those steps that can be accessed when he is requested to go to a different step. Also included is a constraints menu data file 18 such as illustrated in Appendix VI. The constraints menu data file 18 lists constraints which can be selected for activation and/or deactivation at each step. The system also receives information from a Boolean variable name list file which provides a definition for each Boolean variable which is in use. If a Boolean is in the list, by definition, it is a variable that is loaded into the system during a data scan and available for processing. If the variable is not in the list, a message, indicating that the variable is not defined, is produced in final code. This message also indicates that the variable needs to be added to the list and that a read routine modification must be made. This Boolean definition list is not shown in Figure 1, however, an example is illustrated in Appendix VII. The system also can include corresponding lists of real and integer variable names and definitions, although this is also not shown. The translator 10 interacts with the user to identify information related to the steps of the procedures to be automated and the constraints on the procedure execution. The inputs are correlated with the input data files to confirm that correct inputs are being entered by the user to indicate, for example, if a Boolean does not exist on the Boolean list. The system, based on the user inputs, which can be in any phonetic language, produces ultimately executable procedure step code, in a language such as FORTRAN, which is stored in step code files 20.

The step code 20 file along with other files 16, 22, 24 and 26, are processed by the various sequential, parallel and read tasks 28-40 of the COMPRO system 12 using plant data 42 to assist the operator 44 in implementing the desired procedure. The details of the tasks of the COMPRO system 12 can be obtained in U.S. Patents 4,815,014 and 4,803,039 and U.S. Applications 213,057 and 307,831.

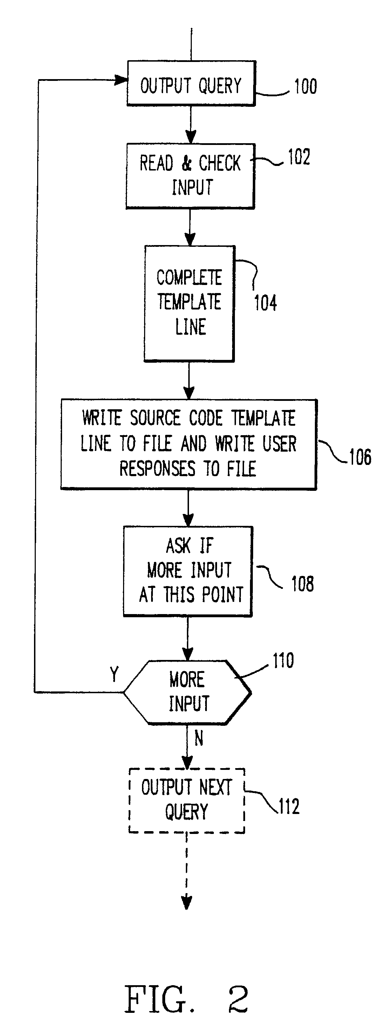

A typical identification session, during which the translator interacts with the user to produce the ultimately executable code, is illustrated in Figure 2. Other identification session process sequences than depicted in Figure 2 can be used such as loops within loops, multiple branch structures and other structures. However, the use of standard structured programming techniques both for the invention and the code produced by the translator is preferred in which loops and multiple branch type structures are eliminated or minimized. The various types of identification session sequences are illustrated in more detail in the FORTRAN source code listing of the microfiche Appendix III. A typical session, such as illustrated in Figure 2, starts with an output 100 of a query to the user. The query could, among other things, be asking the user to indicate how many substeps are within a step or to enter the logic equation for determining whether a particular process condition, such as "pump running", exists. The computer executing the translator program of the microfiche Appendix III then receives or reads 102 the users response to the query and, in an appropriate situation, will check that input for syntax. For example, if the input is a binary variable, the list of logical variables already existing in the system will be checked and the user will be informed whether this is a new binary variable or an existing binary variable. Once the input has been read, the input is used to complete 104 one or more lines in a code template. The operation involves completing blank spots in the template and providing comment code which can include providing the Boolean variable name as a comment line in the source code being produced. Then the template lines, as source code statements, are written 106 to a source code scratch file. At the same time the user's response to the query is written out to a file (not shown). This file allows a software quality assurance engineer, during the validation and verification process, to review the user's responses to confirm that the user's responses to the translation prompts were correct, thereby expediting the code checking process. The translator 10 will then ask 108 the user if there is more input 110 with respect to this sequence step, constraint or other needed information. If there is more input, the system continues the sequence with the same or a different query. If no more inputs are necessary with respect to the subject matter of this identification session, the next identification session is started by an output 112 of an appropriate query.

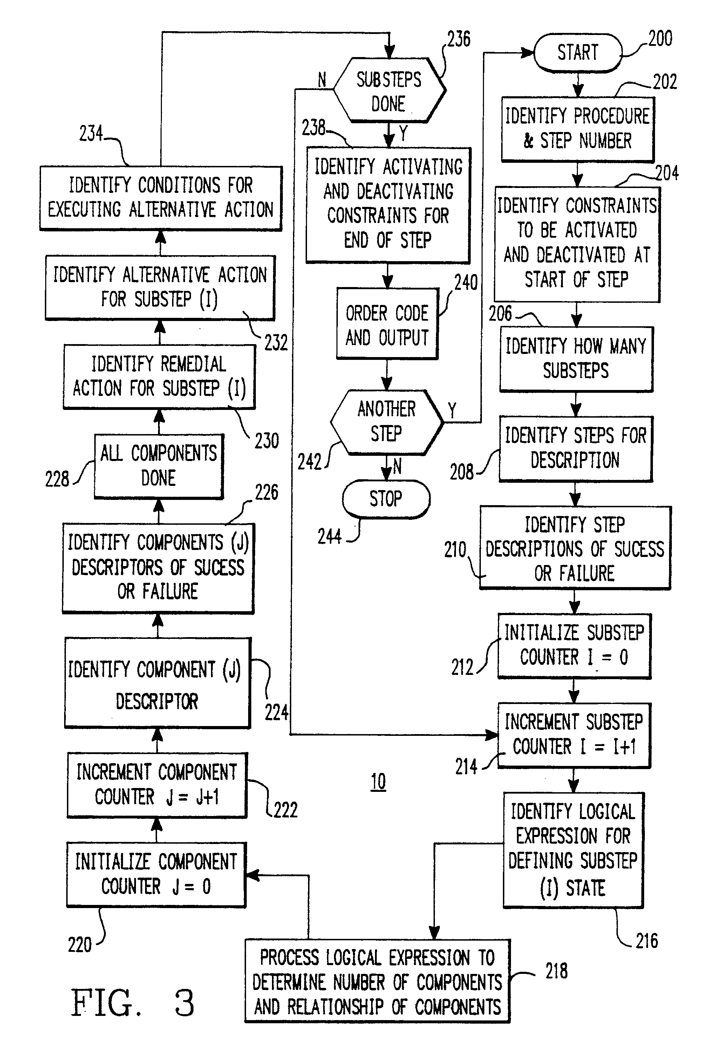

A typical sequence of identification sessions for a system when seeking information about a power plant is illustrated in Figure 3. Once the translator 10 is started 200 the first step is to identify the procedure number, the step number within the procedure and the intent of the step that are to be defined. If the query asking for a procedure number is not answered by the user, the system provides the user with a list of procedures. Once the source code for this identification session is completed, the translator 10 identifies 204, through interacting with the user, the constraints to be activated and deactivated at the start of the step identified in block 202. Next, the translator 10 determines 206, by interrogation, the number of substeps within the step, followed by the identification 208 of the step descriptor. The translator 10 then requires the user to input 210 the state identification phrase which identifies whether the step has been successful or not. The process then enters a loop where the information associated with each substep is input.

Prior to entering this loop, a substep counter is initialized 212 with the number of substeps previously entered, and the first step in the loop is to increment 214 this counter. Within the loop the translator 10 requires that the user identify the logical expression for defining the state of the process at this substep. This logical expression uses the binary variables mentioned previously and the logical operators AND and OR, and, of course, other logical operators such as GT, GE, etc. could also be used in appropriate circumstances. Parentheses can be used within the expression to ensure proper logic description. The logical expression is then analyzed 218 to determine how many components of the logical expression exist. A component is a logical variable or a second level parenthesis which can include therein a comparison of an input signal against a set point. This step 218 determines how many different binary variables are used, and the logical relationship of the components, so that the process can ensure that the user defines the components properly. Once the number of components and the relationship of those components are determined, the process enters a component identification loop after initializing 220 the component counter.

The first step in the component loop is to increment 222 the component counter. Step 224 identifies the appropriate component descriptor. As in the step identification process, the state identification phrase for success or failure for the component must be identified 226. If all the components have been appropriately defined 228 the process begins closing out the code for the end of the substep by first requiring the user to identify any remedial action which is appropriate for the substep followed by 232 identifying any alternative action to the remedial action. If appropriate, the conditions for executing the alternative action are then identified 234. Steps 230-234 are steps which allow the user of the translator to give the operator the option of initiating another preselected procedure. At this point it is also possible to allow the operator to initiate actions other than plant operating procedures. For example, the translator user can automatically or with operator assent initiate the production of a non-procedure display on a different terminal screen. In the COMPRO system, which uses a Raster Tech Display system, this screen initiation is a call to a display subroutine identified by display number. The translator can thus create an appropriate display call by completing a display subroutine call statement template with the display number. Insertion of an appropriate query in the executable code, which is provided to the translator user and which asks for a display number, and the insertion of the code which produces the call statement in a language such as FORTRAN by completing a call display subroutine template ("CALL DISPLAY") is within the skill of those in the art of computer display creation. An example of a completed template subroutine call is set forth on line 278 of Appendix VIII. It is also possible to insert other types of operator controlled action initiations using appropriate queries and subroutine call templates. For example, the system can indicate to the operator that a particular pump will be started when the pump is not started and the procedure requires that the pump be started at this step. Such automatic indication should require operator assent when safety related operations are involved. A completed template for calling a pump start routine could be executed if the operator indicates the pump should be started in such a safety related situation.

Once the substep is completed a determination is made as to whether all of the substeps are complete 236 based on the number of substeps identified in step 206. If all of the substeps are complete, the process begins closing out the end of the step by requiring the user to identify 238 new constraints to be activated and/or deactivated at the end of the step. At the end of the step all the code for the various templates for this step are completed and can be placed in the proper order 240 and output.

The ordering is controlled by the order in which the contents of scratch files are read and written as the final code. During user interrogation, the system writes the responses into scratch files in a predetermined first order. During final code generation the scratch files are read in a different or second order and the order of the scratch file reading is the order of the final code.

Once the code is ordered and output, the session for the step is complete. The translator considers each step to be a separate program and generates independently compilable code for each step. Each step is identified by a step name which includes a step number. The user can then determine 242 whether other steps of the procedure need to be translated. The user can then restart the translator or stop 244. The source code of Appendix III requires that the user reinitialize and start the translator 10 from the beginning for each new step because each step is considered an independent program, however, it is possible for one of ordinary skill in the art to modify the source code of Appendix III to ask the user an appropriate question and begin another step coding session without reinitializing the translator routine. Once the steps are created the step names and numbers are manually ordered, by a person familiar with plant procedures, in the sequence code files 24 which govern the sequence of procedures and sequence of steps within the procedures. The ordering of procedures with respect to each other is also performed by the person familiar with the procedural sequence of the plant process being computer assisted.

The output of a typical session which includes an output for at least one each of the identification sessions of Figure 3 is illustrated in Appendix VIII. This is a translator implementation of a step in a procedure which checks to determine whether boiler feed pumps and lighters are on.

The code of the Appendix is arranged as a main routine and several subroutines. TRANSLATOR is the main routine. The main routine guides the execution of each of the subroutines and when all user responses have been solicited it assembles the parcels of code written to a number of scratch files in the appropriate sequence to produce the final output file. Subroutine CNSTRNT generates the menus from which the user selects appropriate constraints to be activated and deactivated at the beginning and end of the execution of the step being constructed. The SORT subroutine is used to process the Boolean expression that the user inputs to describe the particular aspect of plant state to be achieved at the end of each substep. SORT can accept both explicit logical variables and implicit Booleans that utilize the internal operators GT, GE, EQ, LE and LT as well as NOT. SORT also identifies the type of logic implicit in the Boolean expression as being one of four possible types:

| Type | Structure |
|------|-----------|
| 1 | aaaa |
| 2 | aaaa OR bbbb |
| 3 | aaaa AND bbbb |
| 4 | (aaaa AND bbbb) OR (NOT aaaa AND cccc) |

where aaaa, bbbb and cccc can be simple expressions containing operators as well as single variables and NOTed single variables. SORT also determines the number of individual components that describe the relevant part of the plant state and so dictates the overall structure of the output code for each substep. SUBSORT is a utility subroutine used by SORT to identify certain types of syntax errors that could be present in the Boolean expression input by the translator user. The SORTER subroutine examines the input Boolean expressions to identify the names of all logical, real and integer variables that will appear in the output code for a step, sorts the variable names in alphabetical order and combines the variable names with the corresponding descriptions that appear in the Boolean variable name list file as a convenience for human readers of the output code. The series of WRITEAn, WRITEBn, WRITECn, WRITEDn and WRITEEn subroutines perform the common function of converting character strings input by the user into FORTRAN WRITE statements that, when executed during use of the output code, generate character strings on a COMPRO terminal. The individual subroutines differ from each other in details in the WRITE statements generated and where on the COMPRO terminal screen the messages are to appear. For maintenance purposes field code labels identify which area of the terminal screen are written, thereby allowing easy identification of sections of the code which modifies screens. The series of WRITELn subroutines are used to convert Boolean expressions represented by character strings into FORTRAN IF (----) THEN statements in the output code. The individual subroutines each handle one of the four defined logic types recognized by SORT. The LTYPEn subroutines guide the user in responding to prompts requesting specification of the state identifier character strings associated with each component of each substep in a manner consistent with the logic type imbedded in the Boolean expression for that substep. Again, each subroutine handles one logic type. The CONTx subroutines generate the WRITE statements that in turn produce messages on the COMPRO terminal screen related to advancing to the next step or substep. The CAROn, IOROn, GOROn and TOROn subroutines generate the WRITE statements that, when executed, produce messages on the COMPRO terminal screen relating to executing remedial and alternative actions (CORO), initiating actions (IORO), going to a different step in the current procedure (GORO) and switching to another procedure (TORO). Subroutine STEPLIB is a support routine for the GORO subroutines. It generates the menu of individual step summaries provided for the user to select which new step of the procedure the ultimate COMPRO user should execute next if the desired plant state cannot be achieved at any substep. Subroutine PROCLIB supports the TORO subroutines in virtually the same way as does STEPLIB for the GORO's by generating a menu of available procedures, when switching to a new procedure is considered by the user to be appropriate.

The present invention allows users of software who are familiar with process operation but not themselves computer programmers or who are unfamiliar with high level languages used in a machine assisted execution of a process operating procedures system such as COMPRO to, none the less, translate the contents of conventional paper procedures or conceptual procedures into procedure code simply by responding to prompts appearing on a user terminal screen. The present invention provides automated generation of such code as opposed to the much more time consuming and error prone manual generation of such code. The present invention thereby provides savings in resources related to the software generation process and provides a much easier and straight forward verification and validation process.

The many features and advantages of the invention are apparent from the detailed specification and thus it is intended by the appended claims to cover all such features and advantages of the invention which fall within the true spirit and scope thereof. Further, since numerous modifications and changes will readily occur to those skilled in the art, it is not desired to limit the invention to the exact construction and operation illustrated and described, and accordingly all suitable modifications and equivalents may be resorted to, falling within the scope of the invention.

## Claims

1. A translator, characterized by user interaction means for obtaining operating procedural information from a user; and procedure code production means for producing code for a machine assisted operating procedure from the procedural information.

2. A translator as recited in claim 1, wherein said production means includes a template for the procedure.

3. A translator as recited in claim 1, wherein said production means comprises means for completing a template for the procedure.

4. A translator as recited in claim 1, wherein the procedural information includes step information and said production means produces procedure step code for the step from the step information.

5. A translator as recited in claim 1, wherein said procedural information includes substep and component information and said production means produces substep procedure code and component code based on the substep and component information.

6. A translator as recited in claim 4, wherein said procedural information includes a logical expression and said production means comprises logical expression analysis means for producing logical expression code based on the logical expression.

7. A translator as recited in claim 1, wherein said procedural information includes remedial and alternative actions and said production means produces remedial and alternative action code based on the actions.

8. A translator as recited in claim 1, wherein said interactive means obtains the procedural information in a first order and said code executes with the procedural information in a second order.

9. A translator as recited in claim 8, wherein said first order is the order of a written procedure for a human to perform the procedure and said second order is an order which provides the machine with all variable information before decision steps are executed.

10. A translator as recited in claim 1, wherein said production means produces code for calling a nonprocedural display.

11. A translator for producing machine assisted execution of process operating procedures code from human input, characterized by user query means for requesting from a user procedural information on procedure steps, substeps, components, logical expressions for the substeps, constraints, remedial and alternative actions in a top down order; and code production means for producing machine executable step code, substep code, substeps logical expression code, constraint code, remedial action code and alternative action code action initiation code and nonprocedural display calling code in a different order.

12. A method of translating procedural information from a user concerning a process operating procedure into computer code that assists a process operator in performing the procedure, comprising the steps of: (a) interacting with the user to obtain procedural information; and (b) producing executable machine assisted operating procedure code from the procedural information.

13. A method as recited in claim 12, wherein step (b) comprises completing a code template for the procedure.

14. A method as recited in claim 13, wherein step (a) requests procedural information in categories in an order different from an execution order for the categories of the procedure by the machine.

15. A method as recited in claim 13, wherein step (a) receives the procedural information in a top down order and step (b) produces code executable in a different order.

16. A method as recited in claim 12, wherein step (b) includes producing code for calling a non-procedure display.

17. A method as recited in claim 12, wherein step (b) includes producing code for initiating a procedure related action upon operator assent.

FIG. 1

EP 0 439 245 A2

```
                    ┌─────────────────┐
                    │  OUTPUT QUERY   │────── 100
                    └─────────────────┘
                            │
                            ▼
                    ┌─────────────────┐
                    │  READ & CHECK   │────── 102
                    │     INPUT       │
                    └─────────────────┘
                            │
                            ▼
                    ┌─────────────────┐
                    │   COMPLETE      │
                    │   TEMPLATE      │──── 104
                    │     LINE        │
                    └─────────────────┘
                            │
                            ▼
            ┌───────────────────────────────┐
            │  WRITE SOURCE CODE TEMPLATE    │
            │  LINE TO FILE AND WRITE USER   │──── 106
            │     RESPONSES TO FILE          │
            └───────────────────────────────┘
                            │
                            ▼
                    ┌─────────────────┐
                    │     ASK IF      │
                    │   MORE INPUT    │──── 108
                    │  AT THIS POINT  │
                    └─────────────────┘
                            │
                            ▼
          Y        ╱─────────────────╲
        ┌──────────┤      MORE        │──── 110
        │          │     INPUT        │
        │          ╲─────────────────╱
        │                   │ N
        │                   ▼
        │          ┌─────────────────┐
        │          │  OUTPUT NEXT    │──── 112
        │          │     QUERY       │
        │          └─────────────────┘
        │                   ┆
        │                   ▼
```

# FIG. 2

FIG. 3